# EUROPÄISCHE PATENTSCHRIFT

(11) **EP 3 265 776 B1**
(45) Veröffentlichungstag und Bekanntmachung des Hinweises auf die Patenterteilung: **08.05.2019**
(21) Anmeldenummer: 16707447.5
(22) Anmeldetag: 02.03.2016
(51) Int. Cl.: G01N 1/28, G01N 23/22, G01N 23/223, G01N 1/44

(54) **VERFAHREN ZUR HERSTELLUNG EINER EIN PROBENMATERIAL UMFASSENDEN TABLETTE**
METHOD FOR PRODUCING A TABLET WHICH COMPRISES A SAMPLE MATERIAL
PROCÉDÉ DE FABRICATION D'UNE PASTILLE COMPRENANT UN MATÉRIAU ÉCHANTILLON

(30) Priorität: 05.03.2015 DE 102015103191
(43) Veröffentlichungstag der Anmeldung: 10.01.2018
(73) Patentinhaber: thyssenkrupp Industrial Solutions AG, 45143 Essen (DE); thyssenkrupp AG, 45143 Essen (DE)
(72) Erfinder: TEUTENBERG, Reinhard, 59423 Unna (DE); SCHNEBERGER, Jürgen, 59320 Ennigerloh (DE); BORNEFELD, Marc, 33617 Bielefeld (DE); MAIER, Oliver, 48167 Münster (DE)
(74) Vertreter: thyssenkrupp Intellectual Property GmbH
(86) Internationale Anmeldenummer: PCT/EP2016/054413
(87) Internationale Veröffentlichungsnummer: WO 2016/139242

(56) Entgegenhaltungen:
- WO-A1-2015/000571
- DE-A1- 1 910 232
- DE-A1- 2 021 667
- DE-A1- 2 216 035
- DE-A1- 4 428 920
- US-A- 5 257 302

## Beschreibung

Die Erfindung betrifft ein Verfahren zur Herstellung einer ein Probenmaterial umfassenden Tablette, die für eine Verwendung bei einer Analyse des Probenmaterials vorgesehen ist.

Es ist bekannt, derartige Tabletten als Presstabletten in der Weise herzustellen, dass das Probenmaterial gemahlen und unter Anwendung von Druck und/oder Bindemittel zur Tablette weiterverarbeitet wird. Ein Verfahren dieser Art setzt voraus, dass das Probenmaterial vor dem Mahlen bereits in einer für die fertige Tablette geeigneten stofflichen Konsistenz vorliegt.

Es ist ferner bekannt, derartige Tabletten aus einer Schmelze herzustellen. Dabei wird das Probenmaterial mit einem Schmelzmittel vermischt, diese Probenmaterial-Schmelzmittel-Mischung aufgeschmolzen und die Schmelze in eine Tablettenform gegossen und darin abgekühlt. Ein solches Abkühlen unter gleichzeitiger Formgebung ist jedoch verfahrenstechnisch sowie in apparativer Hinsicht aufwändig. So muss die Abkühlung einer Schmelztablette unter sehr kontrollierten Bedingungen erfolgen, da ein zu rasches Abkühlen zum Brechen der Tablette führen kann, während bei einem zu langsamen Abkühlen die Schmelze kristallisieren würde, wodurch die Tablette ebenfalls ihre Festigkeit verlieren würde.

Aus der WO 2015/000571 A1 und aus der US 5,257,302 sind jeweils Verfahren zur Herstellung einer ein Probenmaterial umfassenden Tablette bekannt, bei denen eine das Probenmaterial umfassende Materialmischung aufgeschmolzen und wieder abgekühlt wird. Das so entstandene glasige Material wird anschließend gemahlen und daraufhin zu der Tablette verpresst.

Die DE 44 28 920 A1 offenbart ein Verfahren zur Herstellung einer Materialprobe für eine Röntgenfluoreszenzanalyse, bei dem grobgemahlenes Probenmaterial, gegebenenfalls nach einem Vermischen mit einem Schmelzmittel, zu einer tablettenförmigen Probe gepresst und der für die Röntgenfluoreszenzanalyse bestimmte Oberflächenbereich dieser Probe mindestens in einer der Messtiefe der Röntgenfluoreszenzanalyse entsprechenden Tiefe aufgeschmolzen wird. Dabei erfolgt das Aufschmelzen des Oberflächenbereichs vorzugsweise mittels eines Laserstrahls.

Die DE 20 21 667 A1 beschreibt ein Verfahren zur Herstellung einer ein Probenmaterial umfassenden Tablette, bei dem das pulverförmige Probenmaterial mit einem Schmelzmittel vermischt, die Probenmaterial-Schmelzmittel-Mischung teilweise aufgeschmolzen und eine Erstarrung der Schmelze herbeigeführt wird, wobei die erstarrte Schmelze die Tablettenform aufweist. Ein Aufschmelzen der Probenmaterial-Schmelzmittel-Mischung erfolgt beispielsweise mittels Plasmastrahlen, Lichtbogenstrahlung oder Laserstrahlung. Eine Analyse des Probenmaterials kann mittels Röntgenfluoreszenzanalyse erfolgen.

Der Erfindung lag die Aufgabe zugrunde, ein verbessertes Verfahren zur Herstellung einer ein Probenmaterial umfassenden Tablette anzugeben.

Diese Aufgabe wird mittels eines Verfahrens gemäß dem Patentanspruch 1 gelöst. Ein Verfahren zur Analyse einer Materialprobe eines Probenmaterials ist Gegenstand des Patentanspruchs 14. Vorteilhafte Ausführungsformen dieser Verfahren sind Gegenstände der weiteren Patentansprüche und ergeben sich aus der nachfolgenden Beschreibung der Erfindung.

Bei einem erfindungsgemäßen Verfahren zur Herstellung einer ein Probenmaterial umfassenden Tablette, bei dem das Probenmaterial zumindest teilweise mit einem Schmelzmittel vermischt, die Probenmaterial-Schmelzmittel-Mischung zumindest teilweise aufgeschmolzen und eine Erstarrung der Schmelze herbeigeführt wird, wobei die erstarrte Schmelze die Tablettenform aufweist oder in die Tablettenform überführt wird, ist vorgesehen, dass die Probenmaterial-Schmelzmittel-Mischung mittels Laserstrahlung, Plasmastrahlung und/oder Elektronenstrahlung aufgeschmolzen wird, wobei das Aufschmelzen unter Verwendung von bildgebender Sensorik oder eines Pyrometers in Echtzeit überwacht wird und wobei durch eine Leistungsregelung einer die Laserstrahlung, Plasmastrahlung und/oder Elektronenstrahlung erzeugenden Vorrichtung eine Regelung des Aufschmelzprozesses realisiert wird.

Die Verwendung von Laserstrahlung, Plasmastrahlung und/oder Elektronenstrahlung ermöglicht eine sehr exakt definierbare, lokal begrenzbare sowie lokal sehr hohe Energieeinbringung in die aufzuschmelzende Probenmaterial-Schmelzmittel-Mischung, was sich positiv auf das Aufschmelzen auswirkt und insbesondere auch eine einfache und gleichzeitig sehr exakte Regelung des Aufschmelzprozesses ermöglicht. Durch die lokal exakt definierte Energieeinbringung kann zudem die bei der Durchführung eines erfindungsgemäßen Verfahrens anfallende Verlustwärme minimiert werden. Auch kann durch die erfindungsgemäße Verwendung von Laserstrahlung, Plasmastrahlung und/oder Elektronenstrahlung ein vergleichsweise schnelles Aufschmelzen der hierfür vorgesehenen Probenmaterial-Schmelzmittel-Mischung erreicht werden, was sich in entsprechendem Maße vorteilhaft auf die für die Herstellung der Tablette benötigte Zeit auswirken kann.

Durch das erfindungsgemäß vorgesehene Aufschmelzen der Probenmaterial-Schmelzmittel-Mischung mittels Laserstrahlung, Plasmastrahlung und/oder Elektronenstrahlung kann in vorteilhafter Weise realisiert werden, dass das Aufschmelzen und optional auch das Herbeiführen der Erstarrung der Schmelze (und eine dabei gegebenenfalls zum Einsatz kommende aktive Kühlung) in Echtzeit überwacht und geregelt wird/werden. Dabei kann auch ausgenutzt werden, dass eine Leistungsregelung der die Laserstrahlung, Plasmastrahlung und/oder Elektronenstrahlung erzeugenden Vorrichtung sehr schnell beziehungsweise im Wesentlichen unmittelbar zu einer entsprechenden Regelung der in die Probenmaterial-Schmelzmittel-Mischung eingebrachten Wärmeenergie führt. Es kann somit eine sehr schnelle und exakte Regelung des Aufschmelzprozesses realisiert werden.

Eine solche Überwachung erfolgt vorteilhafterweise unter Verwendung von bildgebender Sensorik, wie beispielsweise einer CMOS-, Wärmebild- und/oder Infrarotkamera, und/oder eines Pyrometers.

Durch das Aufschmelzen der Probenmaterial-Schmelzmittel-Mischung kann erreicht werden, dass diese in eine homogene bzw. chemisch homogene Schmelze überführt wird, was eine Analyse des Probenmaterials anhand der wieder erstarrten Schmelze zu verbessern hilft. Dadurch können Einflüsse, die sich z.B. aus der Korngrößenverteilung und der Dichte sowie aus mineralogischen Eigenschaften wie Kristallstruktur und Kristallinität der Originalprobe ergeben, deutlich vermindert oder ganz beseitigt werden. Durch Verdünnung der Probe im Schmelzmittel wird zudem die Probenmatrix vereinheitlich und dadurch der sogenannte Matrixeffekt stark verringert.

Als "Tablette" wird erfindungsgemäß ein Festkörper in einer definierten räumlichen Form verstanden, der ein das Probenmaterial umfassendes Materialgemisch aufweist.

Bei der Durchführung eines erfindungsgemäßen Verfahrens kann vorzugsweise vorgesehen sein, dass die Probenmaterial-Schmelzmittel-Mischung selektiv mittels der Laserstrahlung, Plasmastrahlung und/oder Elektronenstrahlung aufgeschmolzen wird. Dabei wird unter "selektiv" ein nach und nach erfolgendes Aufschmelzen der Probenmaterial-Schmelzmittel-Mischung beziehungsweise des hierfür vorgesehenen Anteils davon verstanden, indem der Laserstrahl, der Plasmastrahl und/oder der Elektronenstrahl, dessen Abdeckung kleiner als die von der aufzuschmelzenden Probenmaterial-Schmelzmittel-Mischung bedeckte Fläche ist, entlang dieser Fläche verfahren wird, so dass die Probenmaterial-Schmelzmittel-Mischung über dieser Fläche nach und nach aufgeschmolzen wird. Dabei kann beim Aufschmelzen einer Teilfläche eine zuvor bereits aufgeschmolzene andere Teilfläche bereits wieder erstarren.

Durch die Anzahl der Belichtungsschritte (Einfach- oder Mehrfachbelichtung) kann der Schmelzvorgang beeinflusst werden. Bei der Einfachbelichtung überfährt der Laserstrahl (auch gepulster Laserstrahl) jeden "Punkt" exakt einmal (z.B. nur in Vorwärtsbewegung). Bei der Mehrfachbelichtung überfährt der Laserstrahl jeden "Punkt" mehrmals (z.B. dreimal). Der Vorwärtsbewegung wird dabei eine Rückwärts und/oder Seitwärtsbewegung überlagert. Die Art der Belichtung ist materialabhängig einstellbar (u.a. abhängig vom Probenmaterial).

Weiterhin bevorzugt kann vorgesehen sein, dass das Probenmaterial vor dem Vermischen mit dem Schmelzmittel, vorzugsweise bis zum Erreichen einer Korngröße von maximal 100 µm, besonders bevorzugt von maximal 63 µm, gemahlen wird.

Dies kann sich vorteilhaft auf die Homogenisierung des Probenmaterials beziehungsweise der Probenmaterial-Schmelzmittel-Mischung im Rahmen des Aufschmelzens auswirken.

In einer bevorzugten Ausführungsform des erfindungsgemäßen Verfahrens kann vorgesehen sein, dass das Probenmaterial in einem ersten Mahlschritt vorgemahlen und nach dem Vermischen mit dem Schmelzmittel in einem weiteren Mahlschritt weitergemahlen wird. In diesem Fall kann das Mahlen der Probenmaterial-Schmelzmittel-Mischung primär dem Zweck dienen, das bereits gemahlene Probenmaterial mit dem Schmelzmittel zu vermischen. Dies wird insbesondere dadurch ermöglicht, dass Schmelzmittel vielfach bereits in feinkörniger Form vorliegt. Ein Vorteil, der sich daraus ergeben kann, ist, dass sowohl das Mahlen des Probenmaterials als auch das Vermischen des Probenmaterials mit dem Schmelzmittel in derselben Vorrichtung, nämlich einer geeigneten (Fein-)Mühle, durchgeführt werden kann. Ein Bereitstellen einer zusätzlichen Mischvorrichtung kann dadurch vermieden werden.

Dementsprechend wird unter "Mahlen" erfindungsgemäß nicht zwingend ein Verfahrensschritt verstanden, bei dem eine Bearbeitung eines Materials oder Materialgemisches mit einem Erreichen einer Verkleinerung der Korngröße des Materials oder Materialgemisches verknüpft ist. Vielmehr kann ein solches "Mahlen" ausschließlich oder primär einer Durchmischung eines Materialgemisches dienen, sofern durch den gleichen Verfahrensablauf beziehungsweise durch die Verwendung derselben dabei genutzten Vorrichtung (Mühle) grundsätzlich, d.h. bei sich davon unterscheidenden Verfahrensparametern, ein Mahlen des Materials beziehungsweise Materialgemisches möglich wäre. Die Drehzahl der (Fein-)Mühle kann an den zu erzielenden Mischeffekt angepasst werden (ggf. geringe Geschwindigkeit) und kann sich von einer Mahldrehzahl unterscheiden.

Eine gute Durchmischung des Schmelzmittels mit dem Probenmaterial hat beim Laserschmelzen den Vorteil, dass dann jede sogenannte "Pfütze" (Zone, die umgeschmolzen wird) gleichmäßig zusammengesetzt ist (Korngrößenverteilung von Probe zu Flussmittel immer nahezu gleich).

Gegebenenfalls kann auch vorgesehen sein, das Schmelzmittel dosiert in Form eines Festkörpers mit dem Probenmaterial zu vermischen, wodurch eine Dosierung von Probenmaterial und Schmelzmittel in einem vordefinierten Verhältnis vereinfacht werden kann. In diesem Fall kann es sinnvoll sein, den Schmelzmittel-Festkörper in zumindest einem der Mahlschritte auch zu mahlen d.h. zu Partikeln definierter (maximaler) Korngröße zu zerkleinern.

In einer weiterhin bevorzugten Ausführungsform des erfindungsgemäßen Verfahrens kann vorgesehen sein, dass die Erstarrung der Schmelze derart herbeigeführt wird, dass ein glasiger Bestandteil (die wieder erstarrte Schmelze) der Tablette ausgebildet wird. In bestimmten Ausführungsformen des erfindungsgemäßen Verfahrens kann aber auch eine teilkristalline Ausbildung der erstarrten Schmelze ausreichend oder sogar vorteilhaft sein.

Dabei wird unter "glasig" beziehungsweise "glasiger Bestandteil" ein amorphes Materialgefüge verstanden, das nach dem Abkühlen aus der Schmelze keine geordnete kristalline Struktur aufweist. Ein Überführen der Schmelze in einen glasigen Bestandteil kann insbesondere dadurch erreicht werden, dass die Schmelze ausreichend schnell abgekühlt wird, wodurch eine Kristallisation des Schmelzmaterials verhindert wird.

Der glasige Bestandteil eignet sich besonders vorteilhaft für die Analyse des Probenmaterials, weil in diesem die homogene Mischung, die sich durch das Aufschmelzen des Probenmaterials zusammen mit dem Schmelzmittel ergibt, erhalten bleibt und dieser dabei formstabil ist.

Die Ausbildung eines glasigen Bestandteils der erstarrten Schmelze kann auch durch eine aktive Kühlung, beispielsweise mittels einer Gasströmung (z.B. Luft oder ein Schutzgas) unterstützt werden. Dabei kann auch eine Regelung der aktiven Kühlung dahingehend vorgesehen sein, dass eine Kristallisation möglichst verhindert wird.

Als bei der Durchführung des erfindungsgemäßen Verfahrens vorteilhaft verwendbares Schmelzmittel kann beispielsweise Lithiumtetra- oder -metaborat, Natriumtetra- oder -metaborat, Natriumcarbonat, Kaliumdisulfat und/oder eine Säure, beispielsweise Borsäure, oder ein Gemisch daraus - auch unter Zugabe von Zusatzstoffen (z.B. Fließmittel wie LiBr) - eingesetzt werden.

Weiterhin bevorzugt kann vorgesehen sein, dass das Schmelzmittel mit dem Probenmaterial in einem Verhältnis von zwischen 40:1 bis 2:1, vorzugsweise von zwischen 10:1 und 2:1, vermischt wird.

In einer vorteilhaften Ausführungsform des erfindungsgemäßen Verfahrens kann vorgesehen sein, dass die Probenmaterial-Schmelzmittel-Mischung schichtweise (d.h. in mehreren Schichten nacheinander) aufgeschmolzen und zur Erstarrung gebracht wird. Dies kann ein relativ schnelles Erzeugen der Schmelze infolge einer exakt dosierten und sehr hohen lokalen Energieeinbringung in die Probenmaterial-Schmelzmittel-Mischung (beziehungsweise den für das Aufschmelzen vorgesehenen Anteil davon) ermöglichen.

Dabei kann besonders bevorzugt vorgesehen sein, dass das schichtweise Aufschmelzen und zur Erstarrung bringen der Schmelzmittel-Probenmaterial-Mischung als generatives Fertigungsverfahren zur Herstellung der Tablette (oder des entsprechenden Bestandteils davon) genutzt wird. Ein generatives Fertigungsverfahren ist dadurch gekennzeichnet, dass ein räumlicher Körper aus einem insbesondere pulverförmige Material schichtweise erzeugt wird, indem ausgehend von einer Basisschicht schichtweise Material auf diese Basisschicht aufgebracht, aufgeschmolzen und zur Erstarrung gebracht wird. Ein relevanter Vorteil eines solchen generativen Fertigungsverfahrens liegt darin, dass bedingt dadurch, dass in einer nur relativ dünnen Schicht und lokal begrenzt Material aufgeschmolzen wird, darauf verzichtet werden kann, die Schmelze während des Erstarrens in einer der vorgesehenen Form der wieder erstarrten Schmelze (d.h. in Form der Tablette oder des entsprechenden Bestandteils davon) entsprechenden Negativform aufzunehmen.

Geeignete konkrete Ausführungsformen zur Herstellung der Tablette oder eines Bestandteils davon durch ein generatives Fertigungsverfahren sind das allgemein bekannte selektive Lasersintern, das selektive Laserschmelzen und das (selektive) Elektronenstrahlschmelzen.

Ein schichtweises Aufschmelzen und zur Erstarrung Bringen kann auch dadurch erfolgen, dass zunächst eine Oberflächenschicht aufgeschmolzen und zur Erstarrung gebracht wird, und anschließend eine darunterliegende (d.h. ein bezüglich einer das Aufschmelzen bewirkenden Strahlungsquelle durch die Oberflächenschicht räumlich getrennte) Schicht aufgeschmolzen und zur Erstarrung gebracht wird. Dies kann schrittweise fortgesetzt werden, bis die vorgesehene Stärke der herzustellenden Tablette beziehungsweise des herzustellenden Bestandteils der Tablette erreicht worden ist. Dabei kann gegebenenfalls eine unterschiedliche Absorption für die Laserstrahlung, Plasmastrahlung und/oder Elektronenstrahlung durch die Probenmaterial-Schmelzmittel-Mischung einerseits und die wieder erstarrte Schmelze andererseits ausgenutzt werden.

In einer weiterhin bevorzugten Ausführungsform des erfindungsgemäßen Verfahrens kann auch vorgesehen sein, dass die erstarrte Schmelze gemahlen und anschließend in die Tablettenform überführt und dazu insbesondere verpresst wird. Es kann somit vorgesehen sein, aus der erstarrten und dann gemahlenen Schmelze eine Presstablette auszubilden. Durch eine solche Ausführungsform des erfindungsgemäßen Verfahrens wird die einfache Herstellbarkeit einer ein Probenmaterial umfassenden Tablette in Form einer Presstablette mit der für die spätere Analyse vorteilhaften Homogenisierung des Probenmaterials durch Aufschmelzen kombiniert. Bei dieser Vorgehensweise wird ausgenutzt, dass die vorteilhafterweise durch das Aufschmelzen erreichte Homogenisierung des Probenmaterials durch das Mahlen nicht (in einem relevanten Maße) negativ beeinflusst wird.

In einer weiteren bevorzugten Ausführungsform des erfindungsgemäßen Verfahrens kann vorgesehen sein, dass die Probenmaterial-Schmelzmittel-Mischung (gegebenenfalls nach einer Zumischung eines Bindemittels) vor dem Aufschmelzen verpresst wird. Dies kann insbesondere vorteilhaft sein, wenn nicht vorgesehen ist, die gesamte Tablette in Form einer wieder erstarrten Schmelze auszubilden und somit nicht die gesamte Probenmaterial-Schmelzmittel-Mischung aufgeschmolzen werden soll. Somit kann insbesondere vorgesehen sein, die Tablette grundsätzlich in Form einer Presstablette auszubilden, während lediglich eine primär für die spätere Analyse vorgesehene Oberflächenschicht aufgeschmolzen und wieder zur Erstarrung gebracht wird, um die Analyse durch die vorzugsweise zu erhaltende glasige und damit amorphe Struktur sowie eine Homogenisierung des Probenmaterials in dieser Oberflächenschicht entsprechend zu verbessern. Dabei kann die Oberflächenschicht vorteilhafterweise eine Stärke von zwischen 30 µm und 300 µm aufweisen.

In einer weiterhin bevorzugten Ausführungsform des erfindungsgemäßen Verfahrens kann vorgesehen sein, dass ein Dekontaminierungsmittel in einer Mühle gemahlen und anschließend das mit dem Schmelzmittel zu vermischende Probenmaterial in derselben Mühle gemahlen wird. Dies kann dazu dienen, die Mühle, die gegebenenfalls zuvor schon für ein Mahlen eines andersartigen Probenmaterials genutzt wurde, zu dekontaminieren beziehungsweise gezielt mit dem anschließend zu mahlenden Probenmaterial zu kontaminieren. Dadurch kann eine Kontaminierung des Probenmaterials, die zu einer Verfälschung des Ergebnisses einer sich anschließenden Analyse dieses Probenmaterials führen könnte, möglichst ausgeschlossen werden.

Das Dekontaminierungsmittel kann vorzugsweise eine erste Teilmenge des Probenmaterials sein oder zumindest umfassen (und beispielsweise aus der Probenmaterial-Schmelzmittel-Mischung bestehen). Ebenso kann auch eine Teilmenge der erstarrten Schmelze als Dekontaminierungsmittel genutzt werden. Dies kann insbesondere dann sinnvoll sein, wenn eine andere Teilmenge der erstarrten Schmelze anschließend in der Mühle gemahlen wird, um daraus eine Presstablette auszubilden. Somit kann auch vorgesehen sein, eine Mühle mittels eines ersten Dekontaminierungsmittels, das vorzugsweise eine erste Teilmenge des Probenmaterials umfasst, für ein anschließendes Mahlen einer weiteren Teilmenge des Probenmaterials zu dekontaminieren, wobei diese weitere Teilmenge des Probenmaterials anschließend mit dem Schmelzmittel vermischt und erfindungsgemäß aufgeschmolzen wird. Anschließend kann in derselben oder einer anderen Mühle eine erste Teilmenge der erstarrten Schmelze zur Dekontaminierung der Mühlen gemahlen und anschließend eine weitere Teilmenge der erstarrten Schmelze gemahlen werden, um daraus eine Presstablette auszubilden.

Alternativ oder zusätzlich kann das Dekontaminierungsmittel jedoch auch ein probenmaterialfremdes Material, wie insbesondere Sand, Korund und/oder ein beliebiges feuerfestes Material (auch schamottehaltiges Material) sein oder umfassen.

In einer Ausführungsform des erfindungsgemäßen Verfahrens kann vorgesehen sein, dass das gemahlene Dekontaminierungsmittel verworfen wird, so dass es zumindest nicht weiter im Rahmen des erfindungsgemäßen Verfahrens genutzt wird. Dabei kann insbesondere vorgesehen sein, dass das Dekontaminierungsmittel entsorgt wird.

Möglich ist auch, dass das/die gemahlene(n) Dekontaminierungsmittel verpresst und als Tragschicht für eine zu verpressende Probenmaterial-Schmelzmittel-Mischung und/oder eine zu verpressende (Teil-)Menge von erstarrter und anschließend gemahlener Schmelze genutzt wird/werden. In diesem Fall kann eine Auswahl des Dekontaminierungsmittels (oder zumindest eines Bestandteils davon) auch anhand einer Eignung als Tragschicht erfolgen. Ein Verpressen des/der Dekontaminierungsmittel(s) kann vorzugsweise (jeweils) in einem Formring erfolgen. Dessen Höhe kann dabei vorteilhafterweise größer, vorzugsweise mindestens doppelt so groß wie die Schichtstärke der Tragschicht ist. Die Einheit aus Tragschicht und Formring kann dann als gefäßartige Negativform (zu der vorgesehenen Tablettenform) für die anschließend darin einzubringende Probenmaterial-Schmelzmittel-Mischung/gemahlene erstarrte Schmelze dienen, die darin auch weiterbearbeitet, insbesondere verpresst und/oder aufgeschmolzen werden kann.

Vorteilhafterweise kann der Formring zumindest teilweise aus Edelstahl oder einem Refraktärmetall mit geringem thermischem Ausdehnungskoeffizienten bestehen.

Um einen sicheren Halt der Presstablette innerhalb des Formrings zu gewährleisten kann vorzugsweise vorgesehen sein, dass dieser mindestens eine innenseitige Vertiefung ausbildet, in die ein Probenmaterial umfassendes Material (Probenmaterial-Schmelzmittel-Mischung in pulvriger oder glasiger Form) und/oder Dekontaminierungsmittel beim jeweiligen Verpressen eindringen kann, wodurch sich eine formschlüssige Verbindung zwischen der herzustellenden Presstablette und dem Formring ausbilden kann.

Die Erfindung betrifft weiterhin ein Verfahren zur Analyse eines Probenmaterials, wobei mittels eines erfindungsgemäßen Verfahrens eine das Probenmaterial umfassende Tablette hergestellt und daran anschließend eine Analyse des Probenmaterials anhand der Tablette durchgeführt wird. Bei der Analyse des Probenmaterials kann insbesondere eine Röntgenfluoreszenzanalyse durchgeführt werden.

Bei dem Probenmaterial kann es sich insbesondere um ein oder mehrere natürliche Gesteine, wie beispielsweise Silikate, Karbonate, Sulfate, Sulfide, Salze und/oder Oxide handeln. Weiterhin kann das Probenmaterial insbesondere industrielle Prozessprodukte, wie beispielsweise Schlacke, Flugasche, Legierungen und/oder andere Metallverbindungen, umfassen.

Die unbestimmten Artikel ("ein", "eine", "einer" und "eines"), insbesondere in den Patentansprüchen und in der die Patentansprüche allgemein erläuternden Beschreibung, sind als solche und nicht als Zahlwörter zu verstehen. Entsprechend damit konkretisierte Komponenten sind somit so zu verstehen, dass diese mindestens einmal vorhanden sind und mehrfach vorhanden sein können.

Die Erfindung wird nachfolgend anhand von in den Zeichnungen dargestellten Ausführungsbeispielen näher erläutert. In den Zeichnungen zeigt
- Fig. 1:: schematisch eine mittels einer ersten Ausführungsform eines erfindungsgemäßen Verfahrens hergestellte Tablette;
- Fig. 2:: schematisch eine mittels einer zweiten Ausführungsform eines erfindungsgemäßen Verfahrens hergestellte Tablette;
- Fig. 3:: schematisch die Durchführung eines erfindungsgemäßen Verfahrens in einer dritten Ausführungsform und eine dabei genutzte Vorrichtung; und
- Fig. 4:: schematisch die Durchführung eines erfindungsgemäßen Verfahrens in einer vierten Ausführungsform und eine dabei genutzte Vorrichtung.

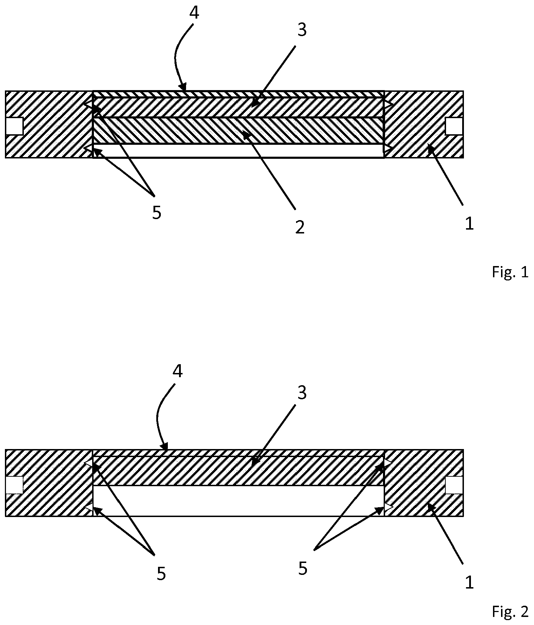

Die Fig. 1 zeigt eine ein Probenmaterial umfassende Tablette, die mittels einer ersten Ausführungsform eines erfindungsgemäßen Verfahrens hergestellt wurde.

Bei dieser Ausführungsform eines erfindungsgemäßen Verfahrens wird zunächst eine erste Teilmenge (z.B. 5 bis 6 g) des aufzubereitenden und zu analysierenden Probenmaterials in eine Feinmühle (nicht dargestellt) dosiert und dort als Spülbeziehungsweise Vorprobe gemahlen. Hierdurch wird die Feinmühle gezielt mit dem aufzubereitenden Probenmaterial kontaminiert. Diese erste Teilmenge des Probenmaterials dient somit als Dekontaminierungsmittel.

Die als Dekontaminierungsmittel genutzte Teilmenge des Probenmaterials wird nach dem Mahlen in der Feinmühle mittels einer Tablettenpresse (nicht dargestellt) in einen Formring 1 aus beispielsweise Edelstahl gepresst (vgl. Fig. 1), um eine Tragschicht 2 für eine weitere Schicht 3 aus einer Mischung einer zweiten Teilmenge des Probenmaterials und einem Schmelzmittel (z.B. ein Schmelzsalz) auszubilden. Diese weitere Schicht 3 beziehungsweise ein Bestandteil davon dient einer nachträglichen Analyse des Probenmaterials. Die Tragschicht 2 ist dafür infolge einer möglichen Kontaminierung durch in der Feinmühle enthaltene Verunreinigungen nicht geeignet. Für die Tragschicht 2 kann beispielsweise eine Schichtstärke von drei bis vier Millimetern vorgesehen sein. Diese Schichtstärke kann ca. 50% der Höhe des Formrings 1 entsprechen. Nach einer Reinigung des Formrings 1 und der Tragschicht 2 wird die aus diesen beiden Komponenten ausgebildete Einheit um 180° (bezüglich einer Radialachse) gedreht, so dass diese Einheit ein nach oben geöffnetes Gefäß ausbildet, in das die weitere Teilmenge des Probenmaterials eingebracht werden kann.

Anschließend wird eine weitere Teilmenge des Probenmaterials in die Feinmühle dosiert und dort in einem ersten Mahlschritt gemahlen. Die Drehzahl, mit der die Feinmühle betrieben wird, und die Mahldauer können dabei in Abhängigkeit von dem zu bearbeitenden Probenmaterial eingestellt werden. Nach dem Abschluss des ersten Mahlschritts wird ein Schmelzmittel (z.B. Lithiumtetraborat) gemäß einem vorgegebenen Mischungsverhältnis in diese gemahlene Teilmenge des Probenmaterials gemischt (z.B. mit einem Mischungsverhältnis von 1:5, d.h. bei einer Menge der weiteren Teilmenge des Probenmaterials von 2 g eine Menge des Schmelzmittels von 10 g). Anschließend wird diese Probenmaterial-Schmelzmittel-Mischung in einem zweiten Mahlschritt in der Feinmühle gemahlen und dabei möglichst optimal durchgemischt. Die Probenmaterial-Schmelzmittel-Mischung wird dann in das von dem Formring 1 und der Tragschicht 2 ausgebildete Gefäß eingebracht und in der Tablettenpresse verpresst. Die so entstandene Presstablette besteht zunächst aus zwei Schichten, nämlich der Tragschicht 2, die aus der gegebenenfalls kontaminierten ersten Teilmenge des Probenmaterials besteht, sowie aus der weiteren, bei der sich anschließenden Analyse zu berücksichtigenden Schicht 3, die aus der verpressten Probenmaterial-Schmelzmittel-Mischung besteht.

Die freie Oberfläche dieser weiteren Schicht 3 wird anschließend mittels eines Lasers (in der Fig. 1 nicht dargestellt) bestrahlt und dabei aufgeschmolzen. Die entsprechende Oberfläche wird dabei vollständig oder in kleinen Abschnitten mittels kontinuierlicher oder gepulster Laserstrahlung (z.B. mittels eines Faserlasers) umgeschmolzen beziehungsweise aufgeschlossen. Nach einem Erstarren dieser Schmelze durch Abkühlen umfasst die herzustellende Tablette eine glasige Schicht 4, die durch ein sehr homogenes Materialgefüge gekennzeichnet ist. Diese glasige Schicht 4 eignet sich in vorteilhafter Weise für eine anschließende Analyse des Probenmaterials in beispielsweise einem Röntgenfluoreszenzanalysator (nicht dargestellt).

Bei einer möglichen Variante wird mit dem Laserstrahl Punkt für Punkt (Fläche für Fläche) der Oberfläche der weiteren Schicht 3 abgerastert. Dabei werden sehr kleine "Schmelzpfützen" erzeugt, die kurze Zeit später wieder glasig erstarren. Durch den fließenden Prozess infolge des Verfahrens des Lasers wird die gesamte Oberfläche homogen aufgeschlossen und zu einer glasigen Schicht 4 umgewandelt.

Der Sinn des Schmelzaufschlusses ist es, das Probenmaterial zusammen mit einem Schmelzmittel in eine homogene Schmelze zu überführen, die beim Abkühlen glasig erstarrt. Durch den Aufschluss werden Einflüsse auf die Intensität der Fluoreszenzstrahlung im Rahmen der Röntgenfluoreszenzanalyse beseitigt oder zumindest verringert, die durch die Korngrößenverteilung und den mineralogischen Originalzustand des Probenmaterials begründet sind. Der Aufschluss führt zu einer einheitlichen Bindungsform der Elemente und mindert durch Verdünnung die gegenseitige Beeinflussung der Elemente durch Sekundäranregung und Absorption.

Das Umschmelzen ist ein chemischer Vorgang. Das Schmelzmittel zersetzt dabei die Verbindungen des Probenmaterials und wandelt diese chemisch um. Aus Silikaten, Aluminaten, Carbonaten und Sulfaten des Probenmaterials (soweit vorhanden) werden so beispielsweise Borate. Durch ein Umschmelzen beziehungsweise Aufschmelzen von beispielsweise Fe₂O₃, Fe₃O₄, FeO, FeCl₂, FeS₂, FeCO₃ mit Tetraborat entstehen Fe-Borate. Durch Umwandlung in Fe-Borate werden die Einflüsse der chemischen Bindung minimiert.

In einer alternativen Ausführungsform des zuvor beschriebenen Verfahrens zur Herstellung einer ein Probenmaterial umfassenden Tablette (gemäß der Fig. 2) ist vorgesehen, dass keine Tragschicht 2 erzeugt wird. Vielmehr wird eine Presstablette ausschließlich aus der Probenmaterial-Schmelzmittel-Mischung ausgebildet. Dazu wird zunächst wieder eine erste Teilmenge des Probenmaterials als Spülprobe beziehungsweise Dekontaminierungsmittel gemahlen, anschließend jedoch verworfen. Nach der erfolgten Dekontaminierung der Mühle wird wiederum eine zweite Teilmenge des Probenmaterials (z.B. 2 g) in zwei Mahlschritten aufbereitet. Im ersten Mahlvorgang wird lediglich diese zweite Teilmenge des Probenmaterials gemahlen. Für den zweiten Mahlschritt wird dann in einem möglichst exakten Verhältnis von beispielsweise 1:5 (Probenmaterial zu Schmelzmittel) ein Schmelzmittel hinzugegeben und gemeinsam mit dem Probenmaterial gemahlen, um eine möglichst optimale Durchmischung dieser Komponenten zu erreichen. Die Mischung aus dem Probenmaterial und dem Schmelzmittel wird dann in eine Tablettenpresse (nicht dargestellt) überführt. Dort wird die Mischung zu einer der Form der herzustellenden Tablette im Wesentlichen entsprechenden Schicht 3 gepresst. Anschließend kann das Aufschmelzen und das Erstarren Lassen einer Oberflächenschicht der Presstablette entsprechend der zuvor beschriebenen Ausführungsform eines erfindungsgemäßen Verfahrens durchgeführt werden, um eine glasige Schicht 4 auszubilden.

Der im Rahmen der Durchführung der zuvor beschriebenen Verfahren genutzte Formring 1 weist an seiner Innenseite zwei umlaufende V-förmige Vertiefungen 5 auf. Dabei befindet sich eine der Vertiefungen 5 in der oberen axialen Hälfte und die andere Vertiefung 5 in der unteren axialen Hälfte des Formrings 1. Der Formring 1 weist beispielsweise eine (axiale) Höhe von 8,5 mm auf. Eine der Vertiefungen 5 befindet sich ausgehend von einem der axialen Enden des Formrings 1 beispielsweise auf einer axialen Höhe von 2,5 mm und die andere Vertiefung (ausgehend von demselben axialen Ende des Formrings 1) auf einer axialen Höhe von 6 mm.

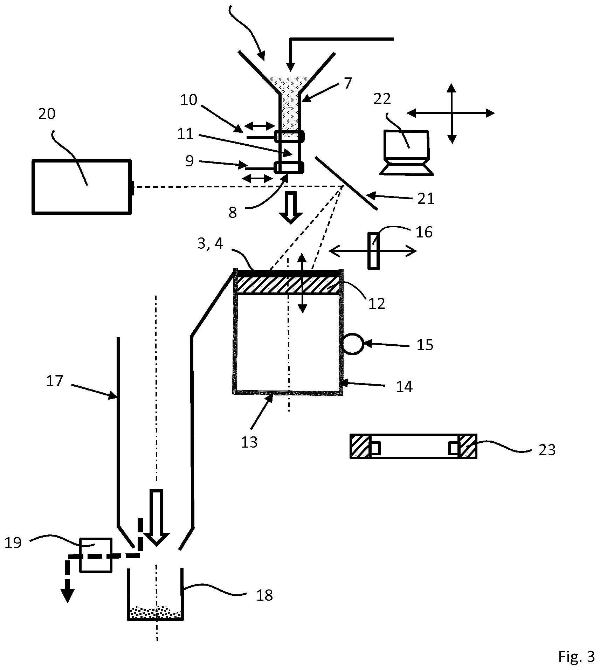

Die Fig. 3 zeigt schematisch die Durchführung eines erfindungsgemäßen Verfahrens in einer dritten Ausführungsform sowie eine bei der Durchführung dieses Verfahrens genutzte Vorrichtung.

Diese Ausführungsform eines erfindungsgemäßen Verfahrens lehnt sich an die Methode des selektiven Laserschmelzens (SLM) an. Das dabei verarbeitete Pulver besteht aus einer Mischung aus einem Probenmaterial und einem Schmelzmittel. Dieses Pulver wird entsprechend dem Vorgehen bei den beiden zuvor beschriebenen Ausführungsformen erfindungsgemäßer Verfahren aufbereitet, d.h. nach einer möglichen Dekontaminierung einer Feinmühle (nicht dargestellt) wird eine Teilmenge des Probenmaterials in einem ersten Mahlschritt in der Feinmühle gemahlen, darauf folgend mit dem Schmelzmittel vermischt und anschließend die Probenmaterial-Schmelzmittel-Mischung in einem zweiten Mahlschritt in der Feinmühle durchmischt.

Anschließend wird eine ausreichende Menge der Probenmaterial-Schmelzmittel-Mischung über einen Einlass 6 einem Dosierer 7 der für die Durchführung dieser Ausführungsform eines erfindungsgemäßen Verfahrens genutzten Vorrichtung zugeführt und hier bevorratet. Im Bereich eines Auslasses 8 umfasst der Dosierer 7 zwei parallel zueinander beabstandete Dosierschieber 9, 10, die in bekannter Weise eine Separierung eines definierten Volumens der Probenmaterial-Schmelzmittel-Mischung von der in dem Dosierer 7 vorgehaltenen Gesamtmenge der Probenmaterial-Schmelzmittel-Mischung ermöglichen, indem bei geschlossenem unterem Dosierschieber 9 der obere Dosierschieber 10 geöffnet wird, so dass Probenmaterial-Schmelzmittel-Mischung in den zwischen den Dosierschiebern 9, 10 ausgebildeten Dosierraum 11 fallen kann. Durch ein Schließen des oberen Dosierschiebers 10 wird dann eine dem Volumen des Dosierraums 11 entsprechende Teilmenge der Probenmaterial-Schmelzmittel-Mischung von der in dem Dosierer 7 vorgehaltenen Restmenge der Probenmaterial-Schmelzmittel-Mischung separiert. Diese separierte Teilmenge kann dann durch ein Öffnen des unteren Dosierschiebers 9 aus dem Dosierer 7 ausgebracht werden.

Eine derart ausgebrachte Teilmenge der Probenmaterial-Schmelzmittel-Mischung fällt auf einen Teller 12 einer unter dem Dosierer 7 angeordneten Aufnahmevorrichtung 13. Der Teller 12 ist innerhalb einer Führung 14 dieser Aufnahmevorrichtung 13 in vertikaler Richtung verfahrbar. Die Aufnahmevorrichtung 13 umfasst weiterhin einen Vibrator 15, mittels dessen die Aufnahmevorrichtung 13 in Schwingung versetzt werden kann. Dies dient einer Auflockerung der auf dem Teller 12 aufliegenden Teilmenge der Probenmaterial-Schmelzmittel-Mischung sowie einer ersten flächigen Verteilung dieser Teilmenge auf dem Teller 12.

Anschließend wird mittels eines Verteilschiebers 16 die Probenmaterial-Schmelzmittel-Mischung in einer möglichst gleichmäßig starken Schicht auf dem Teller 12 verteilt und dabei überschüssige Probenmaterial-Schmelzmittel-Mischung über einen Probenverwurf 17 in einen Probenbecher 18 geleitet. Diese überschüssige Probenmaterial-Schmelzmittel-Mischung kann zur Wiederverwendung aus dem Probenbecher 18 zurück in den Dosierer 7 gefördert werden. Dazu kann der Probenbecher 18 mittels einer automatischen Handhabungsvorrichtung, wie beispielsweise einem Roboter (nicht dargestellt), entnommen und zu dem Einlass 6 des Dosierers 7 bewegt werden. Alternativ kann auch vorgesehen sein, dass die überschüssige Probenmaterial-Schmelzmittel-Mischung aus dem Probenbecher 18 entfernt, beispielsweise mittels einer Absaugvorrichtung 19 abgesaugt, und anschließend gegebenenfalls entsorgt wird.

Die geglättet auf dem Teller 12 der Aufnahmevorrichtung 13 aufliegende Schicht der Probenmaterial-Schmelzmittel-Mischung wird anschließend mittels eines Lasers 20 bestrahlt und dabei selektiv aufgeschmolzen. Hierzu ist ein automatisiert schwenkbarer Spiegel 21 vorgesehen, durch dessen Schwenkbewegung ermöglicht wird, einen definierten Bereich der Schicht der Probenmaterial-Schmelzmittel-Mischung mittels eines durch den Laser 20 erzeugten Laserstrahls nach und nach zu bestrahlen und dadurch aufzuschmelzen (alternativ auch ohne Spiegel möglich, direkter Energieeintrag). Nach einem Erstarren der so erzeugten Schmelze entsteht eine glasige Schicht. Bei dieser glasigen Schicht kann es sich bereits um die herzustellende Tablette handeln. Möglich ist aber auch, schichtweise eine Mehrzahl solcher (stoffschlüssig miteinander verbundenen) glasigen Schichten übereinander auszubilden, indem aufeinanderfolgend jeweils ein Aufbringen einer dosierten Teilmenge der Probenmaterial-Schmelzmittel-Mischung auf den Teller 12 der Aufnahmevorrichtung 13, ein Verteilen beziehungsweise Glätten dieser Teilmenge und ein Aufschmelzen und Erstarren Lassen dieser Teilmenge durchgeführt werden, wobei für jeden Zyklus der Teller 12 um eine Distanz, die der vorgesehenen Schichtstärke der auszubildenden glasigen Schicht im Wesentlichen entspricht, nach unten verfahren wird.

Die so erzeugte(n) glasige(n) Schicht(en) kann/können dann noch optional auf eine Tragschicht (nicht dargestellt) aufgebracht werden, um die Formstabilität der herzustellenden Tablette zu erhöhen.

Mittels einer Transportvorrichtung 22, beispielsweise einem Sauggreifelement, kann/können die Tablette beziehungsweise die glasige(n) Schicht(en) dann aus der Aufnahmevorrichtung 13 entnommen und in einen (nicht dargestellten) Analysator , beispielsweise einen Röntgenfluoreszenzanalysator, überführt werden. Gegebenenfalls kann auch vorgesehen sein, die so erzeugte(n) glasige(n) Schicht(en) (gegebenenfalls in Verbindung mit der Tragschicht) zuvor in einen Probenträger 23 einzusetzen, um die Handhabbarkeit der erzeugten Tablette im Rahmen der Analyse zu verbessern.

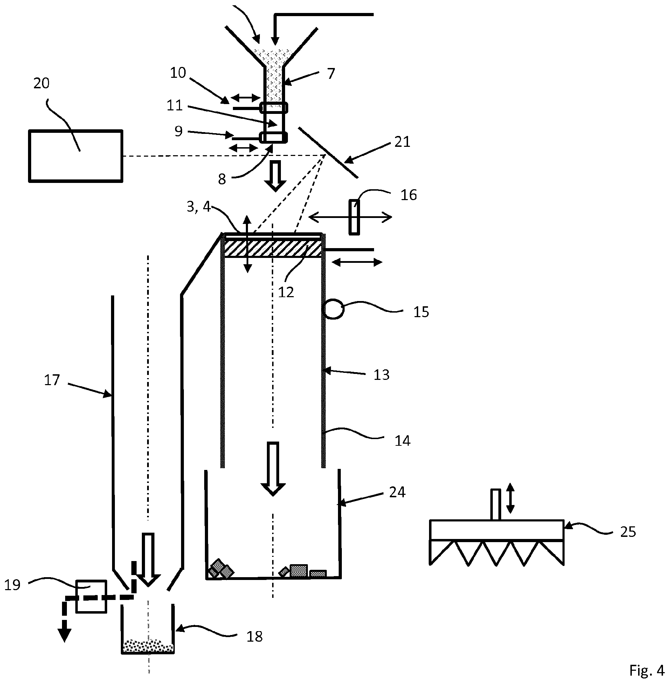

Die Fig. 4 zeigt schematisch die Durchführung eines erfindungsgemäßen Verfahrens in einer vierten Ausführungsform sowie eine bei der Durchführung dieses Verfahrens genutzte Vorrichtung.

Auch diese Ausführungsform eines erfindungsgemäßen Verfahrens lehnt sich an die Methode des selektiven Laserschmelzens (SLM) an. Das dabei verarbeitete Pulver besteht wiederum aus einer Mischung des Probenmaterials mit einem Schmelzmittel. Dieses Pulver wird entsprechend dem Vorgehen bei den zuvor beschriebenen Ausführungsformen erfindungsgemäßer Verfahren aufbereitet, d.h. nach einer möglichen Dekontaminierung einer Feinmühle (nicht dargestellt) wird eine Teilmenge des Probenmaterials in einem ersten Mahlschritt in der Feinmühle gemahlen, darauf folgend mit dem Schmelzmittel vermischt und anschließend die Probenmaterial-Schmelzmittel-Mischung in einem zweiten Mahlschritt in der Feinmühle durchmischt.

Anschließend wird eine ausreichende Menge der Probenmaterial-Schmelzmittel-Mischung über einen Einlass 6 einem Dosierer 7 der für die Durchführung dieser Ausführungsform eines erfindungsgemäßen Verfahrens genutzten Vorrichtung zugeführt und hier bevorratet. Im Bereich eines Auslasses 8 umfasst der Dosierer 7 zwei parallel zueinander beabstandete Dosierschieber 9, 10, die in bekannter Weise eine Separierung eines definierten Volumens der Probenmaterial-Schmelzmittel-Mischung von der in dem Dosierer 7 vorgehaltenen Gesamtmenge der Probenmaterial-Schmelzmittel-Mischung ermöglichen, indem bei geschlossenem unterem Dosierschieber 9 der obere Dosierschieber 10 geöffnet wird, so dass Probenmaterial-Schmelzmittel-Mischung in den zwischen den Dosierschiebern 9, 10 ausgebildeten Dosierraum 11 fallen kann. Durch ein Schließen des oberen Dosierschiebers 10 wird dann eine dem Volumen des Dosierraums 11 entsprechende Teilmenge der Probenmaterial-Schmelzmittel-Mischung von der in dem Dosierer 7 vorgehaltene Restmenge der Probenmaterial-Schmelzmittel-Mischung separiert. Diese separierte Teilmenge kann dann durch ein Öffnen des unteren Dosierschiebers 9 aus dem Dosierer 7 ausgebracht werden.

Eine derart ausgebrachte Teilmenge der Probenmaterial-Schmelzmittel-Mischung fällt auf einen Teller 12 einer unter dem Dosierer 7 angeordneten Aufnahmevorrichtung 13. Der Teller 12 ist innerhalb einer rohrförmigen Führung 14 dieser Aufnahmevorrichtung 13 in vertikaler und horizontaler Richtung verfahrbar. Die Aufnahmevorrichtung 13 umfasst weiterhin einen Vibrator 15, mittels dessen die Aufnahmevorrichtung 13 in Schwingung versetzt werden kann. Dies dient einer Auflockerung der auf dem Teller 12 aufliegenden Teilmenge der Probenmaterial-Schmelzmittel-Mischung sowie einer ersten flächigen Verteilung dieser Teilmenge auf dem Teller 12.

Anschließend wird mittels eines Verteilschiebers 16 die Probenmaterial-Schmelzmittel-Mischung in einer möglichst gleichmäßig starken Schicht auf dem Teller 12 verteilt und dabei überschüssige Probenmaterial-Schmelzmittel-Mischung über einen Probenverwurf 17 in einen Probenbecher 18 geleitet. Diese überschüssige Probenmaterial-Schmelzmittel-Mischung kann zur Wiederverwendung aus dem Probenbecher 18 zurück in den Dosierer 7 gefördert werden. Dazu kann der Probenbecher 18 mittels einer automatischen Handhabungsvorrichtung, wie beispielsweise einem Roboter (nicht dargestellt), entnommen und zu dem Einlass 6 des Dosierers 7 bewegt werden. Alternativ kann auch vorgesehen sein, dass die überschüssige Probenmaterial-Schmelzmittel-Mischung aus dem Probenbecher 18 entfernt, beispielsweise mittels einer Absaugvorrichtung 19 abgesaugt, und anschließend gegebenenfalls entsorgt wird.

Die geglättet auf dem Teller 12 der Aufnahmevorrichtung 13 aufliegende Schicht der Probenmaterial-Schmelzmittel-Mischung wird anschließend mittels eines Lasers 20 bestrahlt und dabei selektiv aufgeschmolzen. Hierzu ist ein automatisiert schwenkbarer Spiegel 21 vorgesehen, durch dessen Schwenkbewegung ermöglicht wird, einen definierten Bereich der Schicht der Probenmaterial-Schmelzmittel-Mischung mittels eines durch den Laser 20 erzeugten Laserstrahls nach und nach zu bestrahlen und dadurch aufzuschmelzen (alternativ auch ohne Spiegel möglich, direkter Energieeintrag). Nach einem Erstarren entsteht eine aufgeschmolzene und abgekühlte Schicht. Gegebenenfalls kann vorgesehen sein, schichtweise eine Mehrzahl solcher (stoffschlüssig miteinander verbundenen) Schichten übereinander auszubilden, indem aufeinanderfolgend jeweils ein Aufbringen einer dosierten Teilmenge der Probenmaterial-Schmelzmittel-Mischung auf den Teller 12 der Aufnahmevorrichtung 13, ein Verteilen beziehungsweise Glätten dieser Teilmenge und ein Aufschmelzen und erstarren Lassen dieser Teilmenge durchgeführt werden, wobei für jeden Zyklus der Teller 12 um eine Distanz, die der vorgesehenen Schichtstärke der gerade auszubildenden aufgeschmolzenen Schicht im Wesentlichen entspricht, vertikal (nach unten) verfahren wird.

Nach der Ausbildung einer oder mehrerer aufgeschmolzener, abgekühlter Schichten wird der Teller 12 horizontal verfahren, wodurch der oder die aufgeschmolzenen, abgekühlten Schichten in einen Aufnahmebehälter 24 fallen. Sobald in dem Aufnahmebehälter 24 eine ausreichende Menge an aufgeschmolzenem, abgekühltem Material (d.h. die aufgeschmolzene(n) Schicht(en) 4, gegebenenfalls in Fragmente zerbrochen) vorliegt, wird der Aufnahmebehälter 24 mittels einer automatischen Handhabungsvorrichtung, beispielsweise einem Roboter entnommen und einer Vorzerkleinerungsvorrichtung 25 zugeführt. Das aufgeschmolzene, abgekühlte Material kann dazu beispielsweise in dem Aufnahmebehälter 24 mittels eines Mörsers oder einer geeigneten Stoßvorrichtung vorzerkleinert werden. Anschließend werden die vorzerkleinerten Partikel einer Feinmühle zugeführt und dort gemahlen. Nach dem Mahlen wird aus dem zuvor aufgeschmolzenen, abgekühlten Material in einer Tablettenpresse eine analysenfertige Presstablette erstellt. Hierzu kann das aufgeschmolzene, abgekühlte und dann vermahlene Material in einem Formring verpresst werden, wie dies anhand der Fig. 1 und 2 beschrieben worden ist.

In allen beschriebenen Ausführungsformen kann anstelle eines Aufschmelzens der Probenmaterial-Schmelzmittel-Mischung mittels Laserstrahlung auch ein Aufschmelzen mittels Plasmastrahlung oder Elektronenstrahlung durchgeführt werden, ohne dass sich die übrigen beschriebenen Verfahrensschritte dafür ändern müssten. Unter Umständen können einzelne Verfahrensschritte auch unter Schutzgas ablaufen (z.B. Argon).

Grundsätzlich in allen erfindungsgemäßen Verfahren und so auch bei den oben beschriebenen Ausführungsformen erfindungsgemäßer Verfahren werden zusätzliche Verfahrensschritte durchgeführt, die insbesondere der Sicherstellung einer hinreichenden Qualität der herzustellenden Tablette dienen. Dabei ist insbesondere vorgesehen, dass das Aufschmelzen der Probenmaterial-Schmelzmittel-Mischung und das wieder Erstarren Lassen der Schmelze kontinuierlich überwacht werden, insbesondere mittels einer Messung der Temperatur der Schmelze, beispielsweise mittels eines Pyrometers (nicht dargestellt) und/oder mittels einer Überwachung der Wärmeverteilung der Schmelze, beispielsweise mittels einer Wärmebildkamera (nicht dargestellt) und entsprechender Bildverarbeitungssoftware. Ebenso kann eine Beobachtung des Schmelzvorganges mittels einer Kamera (insbesondere CMOS; nicht dargestellt) erfolgen. Ebenfalls mittels einer Kamera (nicht dargestellt) kann auch eine Überwachung der Ausbildung der aufgeschmolzenen Schicht beziehungsweise eine Qualitätsprüfung des dabei ausgebildeten Glases durchgeführt werden. Einige oder sämtliche dieser Schritte sind dabei in einer Ausgestaltung als Echtzeitüberwachung (Online-System) vorgesehen.

### Bezugszeichen:

- 1: Formring
- 2: Tragschicht
- 3: Schicht aus einer Probenmaterial-Schmelzmittel-Mischung
- 4: Glasige bzw. aufgeschmolzene, abgekühlte Schicht
- 5: Vertiefung
- 6: Einlass des Dosierers
- 7: Dosierer
- 8: Auslass des Dosierers
- 9: unterer Dosierschieber
- 10: oberer Dosierschieber
- 11: Dosierraum
- 12: Teller der Aufnahmevorrichtung
- 13: Aufnahmevorrichtung
- 14: Führung der Aufnahmevorrichtung
- 15: Vibrator
- 16: Verteilschieber
- 17: Probenverwurf
- 18: Probenbecher
- 19: Absaugvorrichtung
- 20: Laser
- 21: Spiegel
- 22: Transportvorrichtung
- 23: Probenträger
- 24: Aufnahmebehälter
- 25: Vorzerkleinerungvorrichtung

## Patentansprüche

1. Verfahren zur Herstellung einer ein Probenmaterial umfassenden Tablette, wobei das Probenmaterial zumindest teilweise mit einem Schmelzmittel vermischt, die Probenmaterial-Schmelzmittel-Mischung zumindest teilweise aufgeschmolzen und eine Erstarrung der Schmelze herbeigeführt wird, wobei die erstarrte Schmelze die Tablettenform aufweist oder in die Tablettenform überführt wird, wobei die Probenmaterial-Schmelzmittel-Mischung mittels Laserstrahlung, Plasmastrahlung und/oder Elektronenstrahlung aufgeschmolzen wird **dadurch gekennzeichnet, dass** das Aufschmelzen unter Verwendung von bildgebender Sensorik oder eines Pyrometers in Echtzeit überwacht wird, wobei durch eine Leistungsregelung einer die Laserstrahlung, Plasmastrahlung und/oder Elektronenstrahlung erzeugenden Vorrichtung eine Regelung des Aufschmelzprozesses realisiert wird.

2. Verfahren gemäß Anspruch 1, **dadurch gekennzeichnet, dass** die Probenmaterial-Schmelzmittel-Mischung selektiv aufgeschmolzen wird.

3. Verfahren gemäß Anspruch 1 oder 2, **dadurch gekennzeichnet, dass** das Probenmaterial vor dem Vermischen mit dem Schmelzmittel gemahlen wird.

4. Verfahren gemäß Anspruch 3, **dadurch gekennzeichnet, dass** das Probenmaterial in einem ersten Mahlschritt vorgemahlen und nach dem Vermischen mit dem Schmelzmittel in einem weiteren Mahlschritt weitergemahlen wird.

5. Verfahren gemäß einem der vorhergehenden Ansprüche, **dadurch gekennzeichnet, dass** die Erstarrung derart herbeigeführt wird, dass ein glasiger Bestandteil der Tablette ausgebildet wird.

6. Verfahren gemäß einem der vorhergehenden Ansprüche, **dadurch gekennzeichnet, dass** das Schmelzmittel ein Schmelzsalz und/oder eine Säure umfasst.

7. Verfahren gemäß einem der vorhergehenden Ansprüche, **dadurch gekennzeichnet, dass** die Probenmaterial-Schmelzmittel-Mischung schichtweise aufgeschmolzen und zur Erstarrung gebracht wird.

8. Verfahren gemäß einem der vorhergehenden Ansprüche, **dadurch gekennzeichnet, dass** die erstarrte Schmelze gemahlen und anschließend in die Tablettenform überführt wird.

9. Verfahren gemäß einem der vorhergehenden Ansprüche, **dadurch gekennzeichnet, dass** das Herbeiführen der Erstarrung der Schmelze in Echtzeit überwacht wird.

10. Verfahren gemäß Anspruch 9, **dadurch gekennzeichnet, dass** die Überwachung unter Verwendung von bildgebender Sensorik oder eines Pyrometers durchgeführt wird.

11. Verfahren gemäß einem der vorhergehenden Ansprüche, **dadurch gekennzeichnet, dass** ein Dekontaminierungsmittel in einer Mühle gemahlen und anschließend das mit dem Schmelzmittel zu vermischende Probenmaterial oder die erstarrte Schmelze in derselben Mühle gemahlen wird.

12. Verfahren gemäß Anspruch 11, **dadurch gekennzeichnet, dass** das Dekontaminierungsmittel eine erste Teilmenge des Probenmaterials oder der erstarrten Schmelze umfasst.

13. Verfahren gemäß Anspruch 11 oder 12, **dadurch gekennzeichnet, dass** das Dekontaminierungsmittel ein probenmaterialfremdes Material umfasst.

14. Verfahren zur Analyse eines Probenmaterials, **gekennzeichnet durch** die Herstellung einer das Probenmaterial umfassende Tablette gemäß einem der vorhergehenden Ansprüche und die sich daran anschließende Analyse des Probenmaterials anhand der Tablette.

15. Verfahren gemäß Anspruch 14, **gekennzeichnet durch** eine Röntgenfluoreszenzanalyse.

## Claims

1. Process for producing a tablet comprising a sample material, where the sample material is at least partly mixed with a flux, the sample material/flux mixture is at least partly melted and solidification of the melt is brought about, where the solidified melt is in tablet form or is converted to tablet form, where the sample material/flux mixture is melted by means of laser radiation, plasma radiation and/or electron beam, **characterized in that** the melting is monitored in real time using imaging sensors or a pyrometer, where closed-loop power control of a device that generates the laser radiation, plasma radiation and/or an electron beam achieves closed-loop control of the melting operation.

2. Process according to Claim 1, **characterized in that** the sample material/flux mixture is selectively melted.

3. Process according to Claim 1 or 2, **characterized in that** the sample material is ground prior to the mixing with the flux.

4. Process according to Claim 3, **characterized in that** the sample material is pre-ground in a first grinding step and, after being mixed with the flux, is ground further in a further grinding step.

5. Process according to any of the preceding claims, **characterized in that** the solidification is brought about by forming a vitreous constituent of the tablet.

6. Process according to any of the preceding claims, **characterized in that** the flux comprises a flux salt and/or an acid.

7. Process according to any of the preceding claims, **characterized in that** the sample material/flux mixture is melted and solidified layer by layer.

8. Process according to any of the preceding claims, **characterized in that** the solidified melt is ground and then converted to the tablet form.

9. Process according to any of the preceding claims, **characterized in that** the bringing-about of the solidification of the melt is monitored in real time.

10. Process according to Claim 9, **characterized in that** the monitoring is conducted using imaging sensors or a pyrometer.

11. Process according to any of the preceding claims, **characterized in that** a decontaminating agent is ground in a mill and then the sample material to be mixed with the flux or the solidified melt is ground in the same mill.

12. Process according to Claim 11, **characterized in that** the decontaminating agent comprises a first portion of the sample material or of the solidified melt.

13. Process according to Claim 11 or 12, **characterized in that** the decontaminating agent comprises a non-sample material.

14. Process for analysis of a sample material, **characterized by** the production of a tablet comprising the sample material according to any of the preceding claims and the subsequent analysis of the sample material using the tablet.

15. Process according to Claim 14, **characterized by** x-ray fluorescence analysis.

## Revendications

1. Procédé de fabrication d'une pastille comprenant un matériau échantillon, le matériau échantillon étant au moins partiellement mélangé avec un agent fondant, le mélange de matériau échantillon et d'agent fondant étant au moins partiellement fondu et une solidification de la masse fondue étant provoquée, la masse fondue solidifiée présentant la forme de la pastille ou étant transformée dans la forme de la pastille, le mélange de matériau échantillon et d'agent fondant étant fondu au moyen d'un rayonnement laser, d'un rayonnement de plasma et/ou d'un rayonnement électronique, **caractérisé en ce que** la fusion est surveillée en temps réel en utilisant un système de détection d'imagerie ou un pyromètre, une régulation du processus de fusion étant réalisée par une régulation de la puissance d'un dispositif qui génère le rayonnement laser, le rayonnement de plasma et/ou le rayonnement électronique.

2. Procédé selon la revendication 1, **caractérisé en ce que** le mélange de matériau échantillon et d'agent fondant est fondu de manière sélective.

3. Procédé selon la revendication 1 ou 2, **caractérisé en ce que** le matériau échantillon est broyé avant le mélange avec l'agent fondant.

4. Procédé selon la revendication 3, **caractérisé en ce que** le matériau échantillon est prébroyé dans une première étape de broyage et rebroyé dans une étape de broyage supplémentaire après le mélange avec l'agent fondant.

5. Procédé selon l'une des revendications précédentes, **caractérisé en ce que** la solidification est provoquée de telle sorte qu'un élément constitutif vitreux de la pastille est formé.

6. Procédé selon l'une des revendications précédentes, **caractérisé en ce que** l'agent fondant comprend un sel de fonte et/ou un acide.

7. Procédé selon l'une des revendications précédentes, **caractérisé en ce que** le mélange de matériau échantillon et d'agent fondant est fondu et amené à la solidification couche par couche.

8. Procédé selon l'une des revendications précédentes, **caractérisé en ce que** la masse fondue solidifiée est broyée et ensuite transformée dans la forme de la pastille.

9. Procédé selon l'une des revendications précédentes, **caractérisé en ce que** l'obtention de la solidification de l'agent fondant est surveillée en temps réel.

10. Procédé selon la revendication 9, **caractérisé en ce que** la surveillance est effectuée en utilisant un système de détection d'imagerie ou un pyromètre.

11. Procédé selon l'une des revendications précédentes, **caractérisé en ce qu'**un agent décontaminant est broyé dans un broyeur, puis le matériau échantillon à mélanger avec l'agent fondant ou la masse fondue solidifiée est ensuite broyé(e) dans le même broyeur.

12. Procédé selon la revendication 11, **caractérisé en ce que** l'agent décontaminant comprend une première quantité partielle du matériau échantillon ou de la masse fondue solidifiée.

13. Procédé selon la revendication 11 ou 12, **caractérisé en ce que** l'agent décontaminant comprend un matériau exempt de matériau échantillon.

14. Procédé d'analyse d'un matériau échantillon, **caractérisé par** la fabrication d'une pastille comprenant le matériau échantillon selon l'une des revendications précédentes, suivie de l'analyse du matériau échantillon à l'aide de la pastille.

15. Procédé selon la revendication 14, **caractérisé par** une analyse par fluorescence X.
